(19) Europäisches Patentamt / European Patent Office / Office européen des brevets

(11) **EP 4 691 808 A1**

(12) **EUROPEAN PATENT APPLICATION**
published in accordance with Art. 153(4) EPC

(43) Date of publication:
**11.02.2026 Bulletin 2026/07**

(21) Application number: **23929918.3**

(22) Date of filing: **31.10.2023**

(51) International Patent Classification (IPC):
**B60G 17/015** (2006.01)

(52) Cooperative Patent Classification (CPC):
**B60G 17/015; B60G 17/019; B60G 17/027; B60G 17/08**

(86) International application number:
**PCT/CN2023/128513**

(87) International publication number:
**WO 2024/198348 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 CN 202310382073**

(71) Applicant: **BYD Company Limited**
**Shenzhen, Guangdong 518118 (CN)**

(72) Inventors:
• **LIAN, Yubo**
**Shenzhen, Guangdong 518118 (CN)**

• **LIAO, Yinsheng**
**Shenzhen, Guangdong 518118 (CN)**
• **ZHANG, Hongzhou**
**Shenzhen, Guangdong 518118 (CN)**
• **LI, Xie**
**Shenzhen, Guangdong 518118 (CN)**
• **LUO, Renyu**
**Shenzhen, Guangdong 518118 (CN)**

(74) Representative: **Taor, Simon Edward William**
**Venner Shipley LLP**
**200 Aldersgate**
**London EC1A 4HD (GB)**

(54) **VEHICLE JUMP CONTROL METHOD AND APPARATUS, AND SYSTEM AND VEHICLE**

(57) Provided are an active suspension control method and apparatus, a system and a vehicle. The method includes: When receiving a jump instruction, storing energy in an accumulator until energy stored in the accumulator reaches a specified first stored energy; and when the energy stored in the accumulator reaches the first stored energy, controlling an active suspension to drive a vehicle body to jump, to release the first stored energy. Initial jump force of the vehicle body includes: first acting force that is applied by the accumulator and that corresponds to the first stored energy and second acting force applied by a shock absorber of the active suspension. The initial jump force enables an upward movement velocity of the vehicle body to be greater than 0 when a wheel leaves the ground.

When receiving a jump instruction, store energy in an accumulator until energy stored in the accumulator reaches a specified first stored energy — S310

When the energy stored in the accumulator reaches the first stored energy, control an active suspension to drive a vehicle body to jump, to release a first energy storage movement, where initial jump force of the vehicle body includes: first acting force that is applied by the accumulator and that corresponds to the first stored energy and second acting force applied by a shock absorber of the active suspension; and the initial jump force enables an upward movement velocity of the vehicle body to be greater than 0 when a wheel leaves the ground — S320

FIG. 3

## Description

## CROSS-REFERENCE TO RELATED APPLICATIONS

The present disclosure claims priority to Chinese Patent Application No. 202310382073.0, filed on March 31, 2023, and entitled "VEHICLE JUMP CONTROL METHOD AND APPARATUS, SYSTEM AND VEHICLE", which is incorporated herein by reference in its entirety.

## TECHNICAL FIELD

The present disclosure relates to the field of electric vehicle control technologies, and in particular, to a vehicle jump control method and apparatus, a system and a vehicle.

## BACKGROUND

A suspension system of a vehicle is connected between a vehicle body and a tire, and is used to transfer force between a wheel and the vehicle body. Main functions of the suspension system include buffering, vibration filtering and guidance. The suspension system can be classified into passive suspension, semi-active suspension and fully active suspension based on control types. The passive suspension generally refers to a suspension with fixed damping force, which can be forced to move only with the wheel. The semi-active suspension implements passive adjustable damping force by adding an electronic control component. The active suspension can be dynamically and adaptively adjusted according to driving conditions of the vehicle (such as a motion status of the vehicle and a road condition). For the active suspension, a height of the vehicle body is currently adjusted mainly according to a road condition.

## PUBLIC CONTENT

An objective of embodiments of the present disclosure is to provide a control scheme for an active suspension to implement a vehicle jump function.

According to a first aspect of the present disclosure, an embodiment of a vehicle jump control method is provided. The method includes: When receiving a jump instruction, storing energy in an accumulator until energy stored in the accumulator reaches a specified first stored energy; and when the energy stored in the accumulator reaches the first stored energy, controlling an active suspension to drive a vehicle body to jump, to release the first stored energy. Initial jump force of the vehicle body includes: first acting force that is applied by the accumulator and that corresponds to the first stored energy and second acting force applied by a shock absorber of the active suspension. The initial jump force enables an upward movement velocity of the vehicle body to be greater than 0 when a wheel leaves the ground.

Optionally, the accumulator includes a plurality of springs, the active suspension includes a plurality of shock absorbers, and storing energy in the accumulator until energy stored in the accumulator reaches the specified first stored energy includes: storing energy in the plurality of springs until energy stored together in the plurality of springs reaches the specified first stored energy. The second acting force applied by the shock absorber of the active suspension is acting force jointly applied by the plurality of shock absorbers of the active suspension.

Optionally, the accumulator is a spring of the active suspension, and storing energy in the accumulator until energy stored in the accumulator reaches the specified first stored energy includes: controlling the active suspension to perform a first energy storage movement of compressing the spring until energy stored in the spring reaches the specified first stored energy. The initial jump force of the vehicle body includes: the first acting force that is applied by the spring and that corresponds to the first stored energy and the second acting force applied by the shock absorber, so that the upward movement velocity of the vehicle body is to be greater than 0 when the wheel leaves the ground.

Optionally, the first acting force is greater than the second acting force.

Optionally, the initial jump force enables the upward movement velocity of the vehicle body to be greater than 0 when the active suspension reaches a maximum stroke.

Optionally, the shock absorber applies upward acting force to the vehicle body during a process of releasing the first stored energy by the accumulator.

Optionally, a movement velocity of the active suspension during energy storage by the accumulator is smaller than an initial movement velocity of the active suspension during the release of the first stored energy by the accumulator.

Optionally, after controlling the active suspension to drive the vehicle body to jump, the method further includes: When the wheel leaves the ground, controlling the active suspension to perform a wheel-lifting movement of pulling the wheel toward the vehicle body.

Optionally, when the wheel leaves the ground, controlling the active suspension to perform the wheel-lifting movement of pulling the wheel toward the vehicle body includes: When the wheel leaves the ground and a jump speed of the vehicle body decreases to a specified speed threshold, controlling the active suspension to perform the wheel-lifting movement. The specified speed threshold is greater than 0.

Optionally, after controlling the active suspension to perform the wheel-lifting movement of pulling the wheel toward the vehicle body, the method further includes: When the wheel lands, storing energy in the accumulator until energy stored in the accumulator reaches a specified second stored energy, where the second stored energy is greater than the first stored energy; and when the energy stored in the accumulator reaches the second stored energy, controlling the active suspension to drive the vehicle body to jump, to release the second stored energy.

Optionally, a movement velocity of the active suspension during the storage of the second stored energy by the accumulator is greater than a movement velocity of the active suspension during the storage of the first stored energy by the accumulator.

Optionally, after controlling the active suspension to perform the wheel-lifting movement of pulling the wheel toward the vehicle body, the method further includes: When the wheel lands, obtaining a moving speed of a moving component that is of the shock absorber and that is connected to the vehicle body, where the moving speed includes a movement velocity and a moving direction; and based on the moving speed of the moving component of the shock absorber, controlling the shock absorber to output acting force against vibration of the vehicle body.

Optionally, after controlling the active suspension to perform the wheel-lifting movement of pulling the wheel toward the vehicle body, the method further includes: When a vehicle height is lowered, controlling the shock absorber to be in a passive state without actively adjusting an output.

According to a second aspect of the present disclosure, an embodiment of a vehicle jump control apparatus is provided. The control apparatus includes: an energy storage control module, configured to: when receiving a jump instruction, store energy in an accumulator until energy stored in the accumulator reaches a specified first stored energy; and a jump control module, configured to: when the energy stored in the accumulator reaches the first stored energy, control an active suspension to drive a vehicle body to jump, to release the first stored energy. Initial jump force of the vehicle body includes: first acting force that is applied by the accumulator and that corresponds to the first stored energy and second acting force applied by a shock absorber of the active suspension. The initial jump force enables an upward movement velocity of the vehicle body to be greater than 0 when a wheel leaves the ground.

According to a third aspect of the present disclosure, another embodiment of a vehicle jump control apparatus is provided. The control apparatus includes a memory and a processor. The memory stores executable instructions, and the instructions are configured to control the processor to perform an operation for executing the control method according to the first aspect of the present disclosure.

According to a fourth aspect of the present disclosure, an embodiment of an active suspension system is provided. The system includes: an active suspension, including a shock absorber for connecting a vehicle body and a wheel; an accumulator, configured to connect the vehicle body and the wheel; and a control apparatus, where the control apparatus is the control apparatus described in the second aspect or the third aspect of the present disclosure.

According to a fifth aspect of the present disclosure, a vehicle is further provided. The vehicle includes the active suspension system according to the fourth aspect of the present disclosure, and the shock absorber and the accumulator are connected between the vehicle body and the wheel.

One beneficial effect of embodiments of the present disclosure is that according to the control method in embodiments of the present disclosure, when receiving a jump instruction, the control apparatus can store energy in the accumulator according to the jump instruction, so that the accumulator has a capability of driving, together with the shock absorber of the active suspension, the vehicle body to jump. When the energy stored in the accumulator reaches the first stored energy that enables the accumulator to have this capability, the control apparatus controls the active suspension to drive the vehicle body to jump, to release the first stored energy. Herein, the shock absorber of the active suspension and the accumulator may apply upward jump force to the vehicle body. Therefore, the vehicle body jumps upward under action of the jump force. In this case, when the initial jump force applied by the shock absorber and the accumulator to the vehicle body can enable the upward movement velocity of the vehicle body to be greater than 0 when the wheel leaves the ground, the wheel can leave the ground as the vehicle body jumps, completing vehicle jump. It can be seen that according to the control method in embodiments of the present disclosure, the active suspension of the wheel can be used to implement the vehicle jump function, which expands an application scenario of the active suspension and fully utilizes a value of the active suspension.

According to the following detailed description of example embodiments of the present disclosure with reference to the accompanying drawings, other features and advantages of the present disclosure become clear.

**BRIEF DESCRIPTION OF DRAWINGS**

FIG. 1 is a diagram of a structure of an active suspension system according to some embodiments;
FIG. 2 is a diagram of a structure of an active suspension according to some embodiments;
FIG. 3 is a schematic flowchart of an active suspension control method according to some embodiments;
FIG. 4 is a schematic flowchart of an active suspension control method according to some other embodiments;
FIG. 5 is a diagram of an action of a vehicle jump process according to some embodiments;

FIG. 6 is a diagram of a composition structure of an active suspension control apparatus according to some embodiments;

FIG. 7 is a diagram of a composition structure of an active suspension control apparatus according to some other embodiments;

FIG. 8 is a diagram of a hardware structure of an active suspension control apparatus according to some embodiments; and

FIG. 9 is a diagram of a composition structure of a vehicle according to some embodiments.

Reference numerals:

AS: active suspension system; 1: active suspension; 2, 600, and 800: control apparatus; 3: accumulator; 11: spring; 12: shock absorber; 121: working cylinder; 122: piston assembly; 1221: compression relief valve; 1222: rebound relief valve; 123: piston rod; 124: bidirectional pump; 125: motor; 126: accumulator; 900: vehicle.

## DESCRIPTION OF EMBODIMENTS

Example embodiments of the present disclosure are described in detail with reference to the accompanying drawings. It should be noted that relative arrangement of components and steps, numerical expressions and values set forth in these embodiments do not limit the scope of the present disclosure, unless specifically noted otherwise.

The following description of at least one example embodiment is merely illustrative in nature and is not intended to limit the present disclosure, application or usage thereof.

Technologies, methods, and devices are known to a person of ordinary skill in the relevant art may not be discussed in detail. In proper cases, the technologies, methods, and devices should be considered as a part of the specification.

In all examples shown and discussed herein, any specific value shall be interpreted as merely an example and not as limiting. Therefore, another example of the example embodiment may have a different value.

It should be noted that similar reference numerals and letters in the following accompanying drawings indicate similar items. Therefore, once an item is defined in an accompanying drawing, the item does not need to be further discussed in the following accompanying drawings.

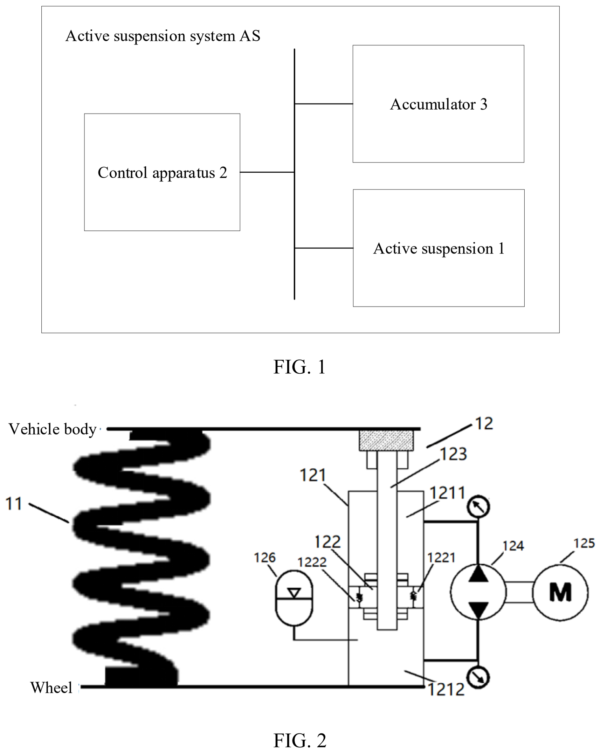

Embodiments of the present disclosure relate to application of an active suspension in implementing a vehicle jump function. To realize the application, an embodiment of the present disclosure provides a vehicle jump control method. FIG. 1 is a diagram of a composition structure of an active suspension system to which a vehicle jump control method according to an embodiment of the present disclosure can be applied.

As shown in FIG. 1, the active suspension system AS may include an active suspension 1, a control apparatus 2, and an accumulator 3. The control apparatus 2 is configured to control actions of a shock absorber of the active suspension 1 and the accumulator 3, to implement vehicle jump.

The accumulator 3 may be a device of any structure capable of storing energy. For example, the accumulator 3 may be any type of elastic member capable of storing elastic potential energy. When the control method in this embodiment of the present disclosure is implemented to control a vehicle to jump, the accumulator 3 provides, by releasing stored energy, acting force for a vehicle body to jump.

The active suspension 1 includes at least the shock absorber. The shock absorber includes a fastening component and a moving component that can move relative to the fastening component. When the shock absorber is connected to a vehicle body and a wheel, the moving component of the shock absorber may be connected to the vehicle body, and the fastening component of the shock absorber may be connected to the wheel. A height of the vehicle body can be adjusted through movement, including rising and falling, of the moving component.

In some embodiments, the active suspension 1 further includes a spring, and the accumulator 3 includes at least the spring of the active suspension 1. For example, the spring of the active suspension 1 may be directly used as the accumulator 3. For another example, the accumulator 3 may alternatively include the spring of the active suspension 1 and another device with energy storage capacity that is additionally disposed and that is independent of the active suspension 1, and the another device is, for example, also a spring. In some other embodiments, the active suspension 1 may alternatively not include a spring, and the accumulator 3 is an assembly that is of the active suspension system AS and that is independent of the active suspension 1. Herein, the spring mentioned in the present disclosure may be any type of elastic element capable of elastic deformation, and is not limited to a coil spring, an air spring, or the like.

FIG. 2 shows a suspension assembly of the active suspension 1. The suspension assembly of the active suspension 1 includes a spring 11 and a shock absorber 12. The spring 11 and the shock absorber 12 are assemblies of the active suspension 1 for connecting the vehicle body and the wheel.

The active suspension 1 may be an independent suspension. Correspondingly, the active suspension 1 includes a plurality of sets of suspension assemblies as shown in FIG. 2. One set of suspension assembly corresponds to one wheel, each set of suspension assembly is connected between the vehicle body and a corresponding wheel, and each set of suspension assembly can act independently under control of the control apparatus 2. This type of independent suspension has stronger adjustment flexibility.

The active suspension 1 may alternatively be a non-independent suspension. For example, the active suspension 1 may include a set of suspension assembly as shown in FIG. 2. The suspension assembly may be connected to each wheel of the vehicle through a transmission mechanism, to transfer force between the wheel and the vehicle body.

For the active suspension including the spring and the shock absorber, refer to FIG. 2. The spring 11 and the shock absorber 12 may occupy different mounting space separately. The spring 11 may be sleeved on the shock absorber 12 to reduce mounting space. The spring 11 may alternatively be connected in series with the shock absorber 12, one end of the spring is connected to the wheel, the other end of the spring is connected to the shock absorber, and an output end of the shock absorber is connected to the vehicle body. This is not limited herein.

The control method in this embodiment of the present disclosure is applicable to any shock absorber that can actively adjust an output under action of a power member. This is not limited herein. In some embodiments, the shock absorber 12 is directly implemented as a power member. For example, the shock absorber is a linear motor or an electric cylinder, and the moving component of the shock absorber is an output shaft of the motor or the electric cylinder. In some other embodiments, the moving component of the shock absorber 12 needs to be driven by a power member. For example, a hydraulic shock absorber needs a motor to drive a bidirectional pump for driving. A moving component of the hydraulic shock absorber is a piston rod, and a fastening component of the hydraulic shock absorber is a working cylinder.

The active suspension system AS may further include a control circuit for driving the shock absorber 12 to act. The control circuit may be an integrated controller or may be formed by connected discrete electronic components. This is not limited herein. The control apparatus 2 may output a control signal to the control circuit, and control action of the active suspension 1 through the control circuit. For example, the power member of the active suspension is a motor. The control circuit is a control circuit of the motor, such as a motor controller. The control apparatus is connected to the motor controller to output a control signal to the motor controller, and then the motor controller controls the motor to rotate at a desired rotation speed and output a desired torque.

FIG. 2 is a diagram of a structure of a suspension assembly of an active suspension 1 according to some embodiments. In these embodiments, as shown in FIG. 2, the shock absorber 12 is a hydraulic shock absorber, and the shock absorber 12 includes a working cylinder 121, a piston assembly 122, and a piston rod 123. A piston body of the piston assembly 122 is slidably and cooperatively connected to an inner wall of the working cylinder 121. The piston assembly 122 divides an inner cavity of the working cylinder 121 into an upper cavity 1211 and a lower cavity 1212. The piston rod 123 is connected to the piston body, to move along with the piston body. The piston rod 123 extends outward through the upper cavity of the working cylinder 121. The shock absorber 12 is connected to the vehicle body by using the piston rod 123, and is connected to the wheel by using the working cylinder 121. Herein, a lower end of the spring 11 and the working cylinder 121 may be connected to the wheel through fastening to a connecting structure, such as a swing arm or a steering knuckle.

In the embodiment of FIG. 2, the shock absorber 12 further includes a bidirectional pump 124. The bidirectional pump 124 communicates with the upper cavity 1211 of the working cylinder 121 through a first pipeline, and communicates with the lower cavity 1212 of the working cylinder 121 through a second pipeline. The shock absorber 12 further includes a motor 125 for driving the bidirectional pump 124 to act. For example, when the motor 125 rotates forward and drags the bidirectional pump 124 to rotate forward, the bidirectional pump 124 transfers liquid in the upper cavity of the working cylinder 121 to the lower cavity of the working cylinder 121 through the pipelines, thereby implementing rebound of the shock absorber 12. Correspondingly, when the motor 125 rotates reversely and drives the bidirectional pump 124 to rotate reversely, the bidirectional pump 124 transfers liquid in the lower cavity of the working cylinder 121 to the upper cavity of the working cylinder 121 through the pipelines, thereby implementing compression of the shock absorber 12. Vice versa, and details are not described herein again.

In the embodiment of FIG. 2, the piston assembly 122 may further include a compression relief valve 1221 and a rebound relief valve 1222 disposed in the piston body, to control maximum hydraulic pressure in the shock absorber 12 by using the compression relief valve 1221 and the rebound relief valve 1222. Herein, hydraulic pressure is pressure applied to the piston assembly 122 by liquid medium (such as hydraulic oil) in the shock absorber 12. When the hydraulic pressure in the shock absorber 12 exceeds a specified maximum hydraulic threshold, a relief valve opens, thereby preventing the shock absorber 12 from damage. For example, when the bidirectional pump 124 transfers a medium from the lower cavity to the upper cavity to implement compression, if hydraulic pressure in the upper cavity exceeds a cracking threshold of the compression relief valve 1221, the compression relief valve 1221 opens, thereby limiting a continued increase in the hydraulic pressure in the upper cavity. For another example, when the bidirectional pump 124 transfers a medium from the upper cavity to the lower cavity to implement rebound, if hydraulic pressure in the lower cavity exceeds an opening threshold of the rebound relief valve 1222, the rebound relief valve 1222 opens, thereby limiting a continued increase in the hydraulic pressure in the lower cavity.

The active suspension system AS may further include a detection apparatus. The detection apparatus is configured to: detect a vehicle status and output a detection signal that reflects the vehicle status. The control apparatus receives the detection signal output by the detection apparatus, and outputs, based on the detection signal, a control signal for controlling action of the active suspension 1, thereby implementing vehicle jump through the active suspension 1.

The vehicle status detected by the detection apparatus includes, for example, at least one of a vehicle height, a vehicle body speed, a vehicle body acceleration, a moving speed of the moving component of the shock absorber, a wheel height, wheel force, hydraulic pressure in the upper cavity of the shock absorber, hydraulic pressure in the lower cavity of the shock absorber, or the like. The detection apparatus includes at least one sensor. For example, the detection apparatus includes an acceleration sensor, a speed sensor, a pressure sensor, a height sensor, a hydraulic sensor, or the like. One sensor is configured to detect at least one vehicle state of the vehicle. A type of sensor included in the detection apparatus may be set based on a need of the control apparatus 2 for performing the control method according to this embodiment of the present disclosure, and is not limited herein.

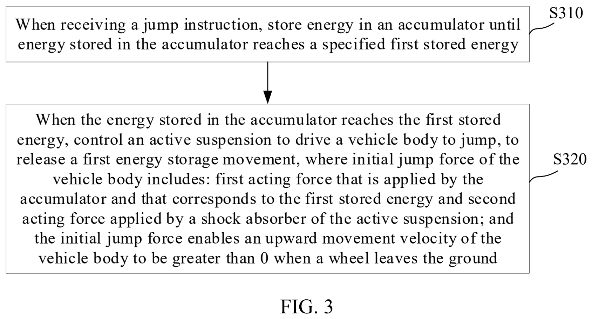

FIG. 3 is a schematic flowchart of an active suspension control method according to some embodiments. The control method may be performed by the control apparatus 2 in FIG. 1. The active suspension system AS in FIG. 1 is used as an example to describe the control method in this embodiment.

As shown in FIG. 3, the control method in this embodiment includes the following steps S310 and S320.

Step S310: When receiving a jump instruction, store energy in an accumulator until energy stored in the accumulator reaches a specified first stored energy.

The jump instruction may be triggered by a user through a jump button set by the wheel, may be triggered by the user through a touchscreen of a vehicle-mounted terminal, or the like. This is not limited herein.

When receiving the jump instruction, the control apparatus 2 performs the control method in this embodiment according to the jump instruction, to complete vehicle jump through the active suspension 1.

In step S310, when receiving the jump instruction, the control apparatus 2 stores energy in the accumulator 3 in a first stage until energy stored in the accumulator 3 reaches the specified first stored energy, so as to prepare for driving a vehicle body to jump.

In an embodiment in which the accumulator 3 is a spring of the active suspension 1, in step S310, the active suspension may be controlled to perform a first energy storage movement of compressing the spring until energy stored in the spring of the active suspension reaches the specified first stored energy. To be specific, a moving component that is of a shock absorber 12 and that is connected to the vehicle body is controlled to retract, and the vehicle body is pulled downward toward a wheel by using the shock absorber 12, thereby pulling the vehicle body to compress the spring 11 connected between the vehicle body and the wheel, to implement spring energy storage.

In an embodiment in which the accumulator 3 is a device independent of the active suspension, because the accumulator 3 and a shock absorber 12 are both connected between the vehicle body and a wheel, in step S310, the control apparatus 2 may also control the active suspension 1 to perform a first energy storage movement of compressing the accumulator 3 until energy stored in the accumulator 3 reaches the specified first stored energy. To be specific, a moving component of the shock absorber 12 is controlled to retract, and the vehicle body is pulled downward toward the wheel by using the shock absorber 12, thereby pulling the vehicle body to compress the accumulator 3, to complete energy storage. In this embodiment, the control apparatus 2 may alternatively store energy in the accumulator 3 by controlling another power output apparatus that is independent of the active suspension 1, which is not limited herein.

The hydraulic shock absorber 12 shown in FIG. 2 is used as an example. When a piston rod 123 of the shock absorber 12 is set to extend outward, a motor 125 and a bidirectional pump 124 both rotate forward. When the piston rod 123 retracts inward, the motor 125 and the bidirectional pump 124 both rotate reversely. A specified cracking hydraulic pressure of a rebound relief valve 1222 is P02 MPa, and a specified cracking hydraulic pressure of a compression relief valve 1221 is P01 MPa. A maximum stroke of the active suspension is L. In the first stage of step S310, the motor 125 is controlled to rotate reversely at a rotation speed n1. In this case, the bidirectional pump 124 also rotates reversely. The bidirectional pump 124 transfers a medium from a lower cavity 1212 of a working cylinder 121 to an upper cavity 1211 of the working cylinder 121, thereby driving the piston rod 123 to retract into the shock absorber. A movement velocity V1 of the piston rod 123 in the first energy storage movement is linearly positively correlated with the rotation speed n1 of the motor, that is:

$$V1 = n1 \times C/A1 \ (1)$$

Herein, C is displacement of the bidirectional pump 124, and A1 is a surface area of a piston assembly 122 in the upper cavity.

According to the formula (1), a greater rotation speed n1 of the motor indicates a greater movement velocity V1 of the piston rod 123 in the first energy storage movement.

In some embodiments, the accumulator 3 includes a plurality of springs. At least some of the plurality of springs are springs of the active suspension 1; or the plurality of springs are disposed independently of the active suspension 1. In these embodiments, the step S310 of storing energy in the accumulator until energy stored in the accumulator reaches the specified first stored energy may include: storing energy in the plurality of springs until energy stored together in the plurality of springs reaches the specified first stored energy. That is, when the accumulator 3 includes the plurality of springs, a quantity of springs is not limited provided that the energy stored together in the plurality of springs reaches the first stored energy. For convenience of control, for example, the plurality of springs of the accumulator may be set to produce a same compression amount in the first stage. In this way, a required minimum compression amount can be determined based on an elastic coefficient of each spring and the specified first stored energy. It is also possible to combine a vehicle body posture and a moving apparatus of the vehicle to produce different compressions on different springs, so that the vehicle can jump smoothly. In the first stage, the control apparatus 2 enables, by compressing the accumulator 3, the accumulator 3 to store energy, so that the accumulator 3 generates elastic deformation corresponding to the first stored energy. Step S320: When the energy stored in the accumulator reaches the first stored energy, control the active suspension to drive the vehicle body to jump, to release the first stored energy.

In step S320, when the energy stored in the accumulator in the first stage reaches the specified first stored energy, the control apparatus 2 controls the active suspension 1 to drive the vehicle body to jump, to release a first energy storage movement.

After storing energy in the accumulator 3 in the first stage, for example, controlling the shock absorber 12 of the active suspension 1 to perform the first energy storage movement of compressing the accumulator 3, the control apparatus 2 controls the active suspension 1 to drive the vehicle body to jump in a second stage. In this case, the accumulator 3 releases the first stored energy. The shock absorber 12 of the active suspension 1 and the accumulator 3 apply jump force to the vehicle body in the second stage of driving the vehicle body to jump. Initial jump force applied by the shock absorber 12 and the accumulator 3 to the vehicle body includes: first acting force that is applied by the accumulator 3 and that corresponds to the first stored energy and second acting force applied by the shock absorber 12. The initial jump force provides a maximum acceleration for the vehicle body to move upward. When action time of the jump force is the same, greater initial jump force indicates a higher jump height of the vehicle body, which helps implement vehicle jump.

The initial jump force should enable an upward movement velocity of the vehicle body to be greater than 0 when the wheel leaves the ground. In this way, the vehicle body may continue to move upward when the wheel leaves the ground, so that a corresponding wheel can be driven, through the active suspension 1, to completely leave the ground, to implement vehicle jump.

In an embodiment in which the active suspension includes a plurality of shock absorbers 12, the second acting force applied by the shock absorber of the active suspension 1 is acting force jointly applied by the plurality of shock absorbers of the active suspension.

For an independent suspension including a plurality of sets of suspension components, the control method according to this embodiment of the present disclosure can implement vehicle jump with one wheel leaving the ground, vehicle jump with two wheels leaving the ground, or vehicle jump with all wheels leaving the ground. For a non-independent suspension, the control method according to this embodiment of the present disclosure can achieve vehicle jump with all wheels leaving the ground.

In the vehicle jump with one wheel leaving the ground based on the independent suspension, an example in which a left front wheel is a target wheel is used. When storing energy in the accumulator in the first stage, the control apparatus 2 at least stores energy in an accumulator assembly corresponding to the left front wheel, and when storing energy in an accumulator assembly corresponding to another wheel, the energy stored in the accumulator assembly corresponding to the left front wheel is greater than the energy stored in the accumulator assembly corresponding to the another wheel. In the second stage, the control apparatus 2 may control a shock absorber corresponding to the left front wheel to lift a left front part of the vehicle body upward. In this case, the accumulator assembly corresponding to the left front wheel releases the stored energy, and the shock absorber and accumulator assembly corresponding to the left front wheel apply jump force to the left front part of the vehicle body, so that the left front part of the vehicle body jumps, and further the left front wheel be driven to leave the ground. When energy is also stored in the accumulator assembly corresponding to the another wheel in the first stage, in the second stage, a shock absorber corresponding to the another wheel may also be controlled to lift the vehicle body upward, but a lifting amount is smaller than a lifting amount for the left front part of the vehicle body. In this case, the accumulator assembly corresponding to the another wheel releases the stored energy to provide auxiliary acting force for the vehicle body with one wheel leaving the ground. In the control of one wheel leaving the ground, the initial jump force can enable an upward movement velocity of the vehicle body to be greater than 0 when the target wheel leaves the ground.

In the vehicle jump with two wheels leaving the ground based on the independent suspension, an example in which a left front wheel and a right front wheel are target wheels is used. When storing energy in the accumulator in the first stage, the control apparatus 2 at least stores energy in accumulator assemblies corresponding to the target wheels. When storing energy in an accumulator assembly corresponding to another wheel, the energy stored in the accumulator assemblies corresponding to the target wheels is greater than the energy stored in the accumulator assembly corresponding to the another wheel. In the second stage, the control apparatus 2 may control shock absorbers corresponding to the target wheels to lift a front half of the vehicle body upward. In this case, the accumulator assemblies corresponding to the target wheels release the stored energy, and the shock absorbers and accumulator assemblies corresponding to the target wheels apply jump force to the front half of the vehicle body, so that the front half of the vehicle body jumps, and further the left front wheel and the right front wheel are driven to leave the ground. When energy is also stored in the accumulator assembly corresponding to the another wheel in the first stage, in the second stage, a shock absorber corresponding to the another wheel may also be controlled to lift the vehicle body upward, but a lifting amount is smaller than a lifting amount for the left front part of the vehicle body. In this case, the accumulator assembly corresponding to the another wheel releases the stored energy to provide auxiliary acting force for the vehicle body with two wheels leaving the ground. In the control of two wheels leaving the ground, the initial jump force can enable an upward movement velocity of the vehicle body to be greater than 0 when the target wheels leave the ground.

In the vehicle jump with all wheels leaving the ground, the control apparatus 2 stores energy in all energy storage assemblies that are of the accumulator and that correspond to the plurality of wheels in the first stage. In the second stage, the control apparatus 2 controls all shock absorbers that are of the active suspension 1 and that correspond to the plurality of wheels (the independent suspension includes a plurality of shock absorbers, and the non-independent suspension may include only one shock absorber) to lift the vehicle body upward. In this case, the accumulator releases the stored energy, and the shock absorbers of the active suspension 1 and the accumulator 3 apply jump force to the vehicle body, so that the vehicle body jumps, and further all wheels are driven to leave the ground. In the control of all wheels leaving the ground, the initial jump force can enable an upward movement velocity of the vehicle body to be greater than 0 when a target wheel leaves the ground, and the initial jump force should further be greater than gravity of the vehicle body. An example in which the accumulator 3 is formed by the spring 11 of the active suspension 1 is used. In order to improve stability and safety of the active suspension 1, the spring 11 is pre-tightened, so that the spring 11 is still in a compressed state when the active suspension 1 is extended to a maximum stroke, or the spring 11 is in a free state without elastic deformation, but not in a stretched state. In this way, in the second stage of control, the accumulator 3 continuously recovers from elastic deformation and releases energy through gradual extension of the active suspension 1. Therefore, a maximum extended stroke of the active suspension in the second stage determines an amount of energy the accumulator 3 can release. The maximum stroke of the active suspension is related to an elastic deformation recovery amount of the accumulator 3. When an elastic coefficient is not changed, a greater elastic deformation recovery amount indicates higher energy is released. The maximum extended stroke of the active suspension in the second stage depends on a stroke setting of the shock absorber 12. When a moving component of the shock absorber 12 reaches a maximum extended stroke, the spring 11 stops recovering from deformation. In order to fully utilize the first stored energy stored in the accumulator 3, in some embodiments, the active suspension 1 may be controlled to reach the maximum stroke of the active suspension 1 in the second stage of movement. In this case, energy released by the accumulator 3 reaches a maximum value, and the initial jump force enables an upward movement velocity of the vehicle body to be greater than 0 when the active suspension reaches the maximum stroke. When the active suspension 1 reaches the maximum stroke, if the vehicle body continues to move upward, the wheel can be driven, through the active suspension, to leave the ground, to implement vehicle jump.

The initial jump force includes the first acting force that is applied by the accumulator 3 and that corresponds to the first stored energy and the second acting force applied by the shock absorber 12. Therefore, initial jump force that satisfies the vehicle jump may be obtained by designing various parameters that are of the first stored energy and the shock absorber 12 and that relate to output acting force.

The control apparatus 2 may detect, through a first detection signal that is output by a detection apparatus and that reflects the stored energy of the accumulator, whether the energy stored in the accumulator in the first energy storage movement reaches the first stored energy.

The first detection signal may be any detection signal associated with the stored energy of the accumulator, for example, may be a detection signal related to spring force, a detection signal related to an upper cavity hydraulic pressure and a lower cavity hydraulic pressure of the shock absorber 12, a detection signal related to a movement velocity of the moving component of the shock absorber 12, a detection signal related to a vehicle body height between the vehicle body and the wheel, or the like. This is not limited herein.

When it is determined whether the energy stored in the accumulator 3 reaches the first stored energy through the detection signal of the movement velocity of the moving component of the shock absorber 12, the specified cracking hydraulic pressure P01 of the compression relief valve 1221 may be set to match the specified first stored energy. When the shock absorber 12 performs the first energy storage movement, the upper cavity hydraulic pressure of the working cylinder 121 increases and the lower cavity hydraulic pressure decreases. When the upper cavity hydraulic pressure reaches the specified cracking hydraulic pressure P01 of the compression relief valve 1221, the compression relief valve 1221 opens, the upper cavity hydraulic pressure stops increasing, and the piston rod 123 of the shock absorber 12 stops moving. In this case, it means that the energy stored in the accumulator reaches the specified first stored energy.

The initial jump force further includes the second acting force applied by the shock absorber 12. Therefore, acting force output by the shock absorber 12 in releasing the first stored energy may be set based on a specified force distribution ratio between the accumulator 3 and the shock absorber 12, to obtain the initial jump force that satisfies the vehicle jump.

In order to simplify a mechanical design and reduce parts and components losses of the shock absorber of the active suspension 1 under high-speed and high-torque rotation, in some embodiments, the first acting force applied by the accumulator 3 may be set to be greater than the second acting force applied by the shock absorber 12. In this case, the accumulator 3 plays a leading role in driving the vehicle body to jump, provided that the shock absorber 12 can apply the upward second acting force in an initial stage of releasing the first stored energy.

In addition, when the accumulator 3 is determined, a jump height of the vehicle may be controlled by adjusting the acting force output by the shock absorber 12 in driving the vehicle body to jump. Therefore, in some embodiments, the jump height may be set by the user. When the jump instruction indicates the jump height, the control apparatus 2 may determine, based on preset mapping data, acting force that needs to be output by the shock absorber 12 and that corresponds to the indicated jump height. The mapping data reflects acting force that needs to be output by the shock absorber 12 and that corresponds to different jump heights. When the jump instruction does not indicate the jump height, the shock absorber 12 may be controlled based on a default setting.

In some embodiments, the shock absorber 12 may be controlled to apply upward acting force to the vehicle body during the process of releasing the first stored energy by the accumulator 3. The example in which the accumulator 3 is formed by the spring 11 of the active suspension 1 is used. An elastic deformation recovery amount of the accumulator 3 per unit time is related to an extended stroke of the shock absorber 12 per unit time. Therefore, to prevent the shock absorber 12 from limiting the accumulator 3 in recovering from elastic deformation, the upward movement velocity of the moving component of the shock absorber 12 may be set to no less than a deformation recovery rate at which the spring 11 alone lifts the vehicle body based on the first stored energy. In this way, during an entire process of releasing the first stored energy by the accumulator 3, the shock absorber 12 may assist the accumulator 3 in driving the vehicle body to jump upward, without consuming the energy released by the accumulator 3 due to a need of pulling, through the vehicle body, the moving component of shock absorber 12 upward along with the vehicle body. Further, when the energy stored in the accumulator in the first stage is the same, the vehicle body may obtain a higher jump height in the second stage.

As described above, the moving component of the shock absorber 12 may move at a high speed during the release of the first stored energy, which helps the active suspension 1 drive the vehicle body to jump. A primary purpose of the first energy storage movement is to store sufficient elastic potential energy for the accumulator 3. Therefore, in some embodiments, a movement velocity of the active suspension 11 during energy storage (that is, in the foregoing first energy storage movement) by the accumulator may be at least lower than an initial movement velocity of the active suspension 11 during the release of the first stored energy by the accumulator, to reduce parts and components losses of the shock absorber 12 of the active suspension 1 and a switch device in a control circuit under high-speed rotation, thereby prolonging a service life of the active suspension system.

The hydraulic shock absorber 12 shown in FIG. 2 is still used as an example. In the second stage of step S320, the motor 125 is controlled to rotate forward at a rotation speed n2. In this case, the bidirectional pump 124 also rotates forward. The bidirectional pump 124 transfers a medium from the upper cavity 1211 of the working cylinder 121 to the lower cavity 1212 of the working cylinder 121, thereby driving the piston rod 123 to extend outward relative to the working cylinder 121. A movement velocity V2 of the piston rod 123 during the release of the first stored energy by the accumulator 3 is linearly positively correlated with the rotation speed n2 of the motor. When torque output by the motor is not changed, the rotation speed n2 of the motor is positively correlated with power output by the motor. Therefore, to obtain a larger movement velocity V2, for example, the motor 125 may be controlled to operate at specified maximum power in the second stage.

When the medium is transferred from the upper cavity 1211 of the working cylinder 121 to the lower cavity 1212, the lower cavity hydraulic pressure of the working cylinder 121 is greater than the upper cavity hydraulic pressure. In this case, the lower cavity hydraulic pressure P2 increases rapidly, and the upper cavity hydraulic pressure P1 decreases rapidly. When the lower cavity hydraulic pressure P2 reaches the specified cracking hydraulic pressure P02 of the rebound relief valve 1222, the piston rod of the shock absorber 12 provides upward acting force F2 to the vehicle body:

$$F2 = P2 \times A2 - P1 \times A1 \quad (2)$$

Herein, A2 is a surface area of the piston assembly 122 in the lower cavity, and A1 is a surface area of the piston assembly 122 in the upper cavity.

At this time, the acting force F2 applied by the shock absorber 12 and acting force F1 that can be applied by the accumulator 3 act on the vehicle body together, providing a jump acceleration for the vehicle body.

It can be seen from step S310 and step S320 that according to the control method in this embodiment of the present disclosure, a vehicle jump function can be implemented through the active suspension 1, which expands an application scenario of the active suspension and fully utilizes a value of the active suspension.

In some embodiments, to enable the vehicle to complete jump to a greater extent, after controlling the active suspension to start driving the vehicle body to jump in the foregoing step S320, the method may further include the following step S330: When the wheel leaves the ground, control the active suspension to perform a wheel-lifting movement of pulling the wheel toward the vehicle body.

In these embodiments, when a controller detects, by using the detection apparatus, that the vehicle leaves the ground, the controller performs a third stage of control. That is, the controller controls the active suspension 1 to perform the wheel-lifting movement of pulling the wheel toward the vehicle body.

The control apparatus 2 may determine, through a second detection signal that reflects a wheel position and that is output by the detection apparatus, whether the wheel leaves the ground.

The second detection signal may be any detection signal associated with the wheel position, for example, may be a detection signal related to a wheel height, a detection signal related to a tire pressure change, or a detection signal related to a vehicle height. A reference vehicle height at which the wheel leaves the ground may be pre-calibrated, to determine, based on the detection signal related to the vehicle height, whether the wheel leaves the ground, or the like. This is not limited herein.

When the control apparatus 2 determines that the wheel leaves the ground or after the wheel leaves the ground, the control apparatus 2 may control the active suspension 1 to perform the wheel-lifting movement of pulling the wheel toward the vehicle body. That is, the control apparatus 2 controls the moving component of the shock absorber 12 to retract inward relative to a fastening component. In this case, the shock absorber 12 pulls the wheel upward by using the fastening component connected to the wheel, to increase a ground clearance of the wheel.

The hydraulic shock absorber 12 shown in FIG. 2 is still used as an example. In the third stage of control, the control apparatus 2 controls the motor 125 to rotate reversely at a rotation speed n3. In this case, the bidirectional pump 124 also rotates reversely. The bidirectional pump 124 transfers a medium from the lower cavity 1212 of the working cylinder 121 to the upper cavity 1211 of the working cylinder 121, thereby driving the piston rod 123 to retract into the shock absorber, to achieve a control purpose of pulling the wheel upward.

Due to a time limit of the vehicle jump in the air, in the third stage, the control apparatus 2 may control the motor 125 to rotate reversely at a specified maximum rotation speed, to lift the wheel as quickly as possible.

In some embodiments, when the wheel leaves the ground and a jump speed of the vehicle body decreases to a specified speed threshold, the control apparatus 2 controls the active suspension 11 to perform the wheel-lifting movement, and the specified speed threshold is greater than 0. The jump speed of the vehicle body decreases to the specified speed threshold, which indicates that the accumulator 3 has released the first stored energy. In this case, the active suspension 11 is controlled to perform the wheel-lifting movement, which can fully utilize the energy stored in the active suspension 1 in the first energy storage movement.

In these embodiments, the control apparatus 2 may determine, based on a detection signal that is related to a vehicle body speed and that is output by the detection apparatus, whether the jump speed of the vehicle body decreases to the specified speed threshold.

In some embodiments, after controlling the active suspension to perform the wheel-lifting movement of pulling the wheel toward the vehicle body, the method may further include the following steps S340 and S350.

Step S340: When the wheel lands, obtain a moving speed of the moving component that is of the shock absorber and that is connected to the vehicle body.

The moving speed of the moving component includes a movement velocity and a moving direction.

In step S340, the control apparatus 2 may obtain the moving speed of the moving component of the shock absorber 12 by using the detection apparatus.

In step S340, when the wheel lands, the control apparatus 2 may obtain the moving speed of the moving component of the shock absorber 12 at a specified sampling frequency, to perform active vibration resistance adjustment based on a real-time movement state of the active suspension 1 after the wheel lands.

Step S350: Based on the moving speed of the moving component of the shock absorber, control the shock absorber to output acting force against vibration of the vehicle body.

In step S350, the control apparatus 2 may obtain, based on the moving speed of the moving component, acting force that is applied to the moving component and that is required to suppress the movement of the moving component. After the wheel lands, the vehicle body vibrates along with the accumulator 3, and the moving component of the shock absorber 13 vibrates along with the vibration of the vehicle body. Therefore, this is equivalent to obtaining the acting force required to resist the vibration of the vehicle body, and torque and a rotation speed of the motor are determined based on the acting force, to complete a corresponding control, so that the vehicle body is quickly stabilized.

In another embodiment, in step S350, active acting force required to resist the vibration of the vehicle body may be determined based on the moving speed of the moving component of the shock absorber. When the required active acting force is greater than a maximum damping force that the shock absorber 12 may provide, the shock absorber is controlled to output acting force to resist the vibration of the vehicle body. When the required active acting force is less than or equal to the maximum damping force that the shock absorber 12 may provide, a switch valve on a connecting pipeline of the shock absorber 12 may be switched off to prevent a medium from flowing between the upper cavity and lower cavity. In this way, the vibration of the vehicle body is suppressed by simply using the damping force, reducing external energy consumption of suppressing the vibration of the vehicle body.

Through step S340 and step S350, the vehicle body may be quickly stabilized after the wheel lands, thereby improving user comfort during end of the jump.

In some embodiments, to improve impact resistance of the active suspension during jump and landing of the vehicle, and effectively protect the active suspension and another vehicle component from damage, after the active suspension is controlled to perform the wheel-lifting movement of pulling the wheel toward the vehicle body in the foregoing step S330, the following step may be further included: When the vehicle descends, the shock absorber is controlled to be in a passive state without actively adjusting an output. In these embodiments, at a moment the vehicle lands, the active suspension provides buffering mainly based on the spring 11, and the shock absorber 12 is in the passive state without actively adjusting the output, that is, in a passive state in which a power member is not working.

In some embodiments, in the control method, the vehicle may alternatively be driven to jump a plurality of times through the active suspension 1. After controlling the active suspension to perform the wheel-lifting movement of pulling the wheel toward the vehicle body in the foregoing step S330, the method further includes the following steps: when the wheel lands, storing energy in the accumulator, for example, controlling the active suspension to perform a second energy storage movement of compressing the spring until energy stored in the accumulator reaches a specified second stored energy; and when the energy stored in the accumulator reaches the second stored energy, controlling the active suspension to drive the vehicle body to jump, to release the second stored energy.

In these embodiments, after the vehicle completes a first jump based on steps S310 to S330, the vehicle may control a second jump after the wheel lands. During the control of the second jump, the vehicle body maintains downward motion inertia when the vehicle lands, so that elastic potential energy may be stored in the accumulator 3 through movement of the vehicle body. Therefore, the second stored energy can be greater than the first stored energy. This indicates that when the control apparatus controls, according to step S320, the active suspension to drive the vehicle body to jump, to release the second stored energy, the vehicle can obtain a higher jump height. By analogy, the control apparatus 2 can control, according to a jump instruction, the vehicle to jump a plurality of times continuously. When a quantity of jumps corresponding to the jump instruction is reached, a landing adjustment control may be completed according to the foregoing steps S340 and S350. Details are not described herein again.

In some embodiments, the control apparatus 2 may control a movement velocity of the active suspension 11 during the storing of the second stored energy by the accumulator 3 (corresponding to the active suspension 11 performing the second energy storage movement) to be greater than the movement velocity of the active suspension 11 during the storing of the first stored energy by the accumulator 3 (corresponding to the active suspension 11 performing the first energy storage movement), to fully utilize the downward motion inertia of the vehicle body to complete energy storage.

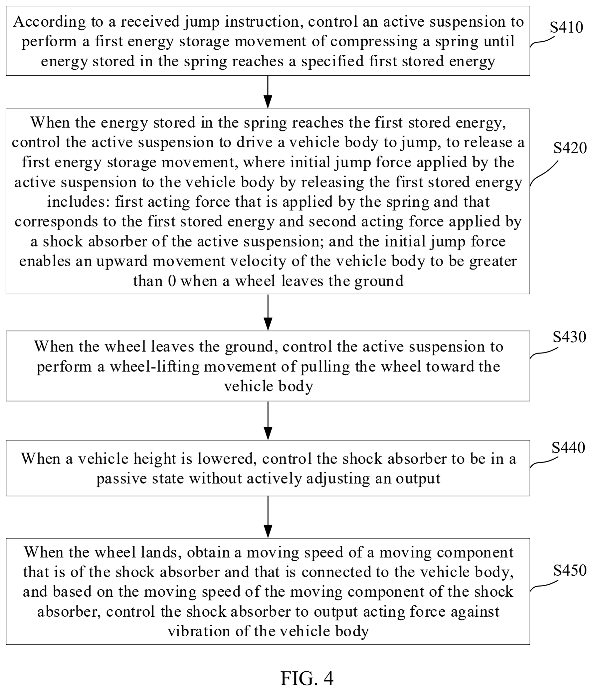

FIG. 4 is a schematic flowchart of a vehicle jump control method according to some other embodiments. In these embodiments, an accumulator 3 is formed by a spring 11 of an active suspension 1. As shown in FIG. 4, the control method may include the following steps.

Step S410: According to a received jump instruction, control the active suspension to perform a first energy storage movement of compressing the spring until energy stored in the spring reaches a specified first stored energy.

Step S420: When the energy stored in the spring reaches the first stored energy, control the active suspension to drive a vehicle body to jump, to release the first stored energy.

Initial jump force applied by the active suspension to the vehicle body by releasing the first stored energy includes: first acting force that is applied by the spring 11 and that corresponds to the first stored energy and second acting force applied by a shock absorber 12. The initial jump force enables an upward movement velocity of the vehicle body to be greater than 0 when a wheel leaves the ground.

Step S430: When the wheel leaves the ground, control the active suspension to perform a wheel-lifting movement of pulling the wheel toward the vehicle body.

Step S440: When a vehicle height is lowered, control the shock absorber to be in a passive state without actively adjusting an output.

Step S450: When the wheel lands, obtain a moving speed of a moving component that is of the shock absorber and that is connected to the vehicle body, and based on the moving speed of the moving component of the shock absorber, control the shock absorber to output acting force against vibration of the vehicle body.

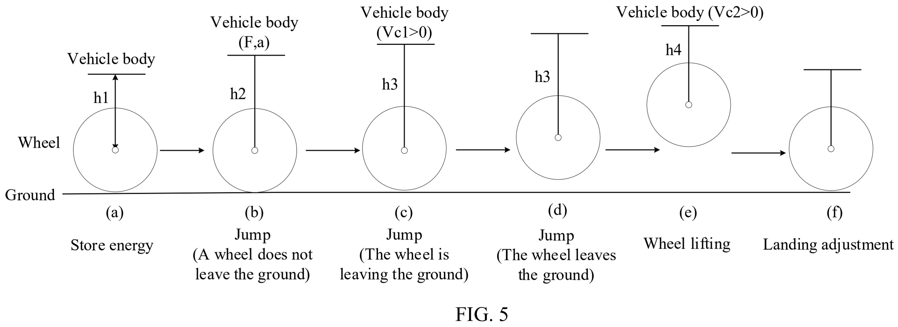

FIG. 5 is a diagram of an action of a vehicle jump process according to some embodiments. In combination with the active suspension 1 of FIG. 2, as shown in FIG. 5, a first stage is an energy storage stage, and a control apparatus 2 controls the active suspension 1 to perform a first energy storage movement of compressing a spring 11. A shock absorber 12 applies acting force to a vehicle body to pull the vehicle body downward, so that the active suspension 1 (including the spring 11 and the shock absorber 12) is compressed to a first height h1 as shown in (a) in FIG. 5. In this case, energy stored in the active suspension 1 reaches a specified first stored energy.

A second stage is a jump stage, and (b), (c) and (d) in FIG. 5 correspond to the jump stage. When the energy stored in the spring 11 reaches the first stored energy, the control apparatus 2 controls the shock absorber 12 to cancel the acting force of pulling the vehicle body downward and apply upward second acting force to the vehicle body. In this case, the spring 11 applies first acting force corresponding to the first stored energy to the vehicle body. The second acting force and the first acting force jointly act on the vehicle body, causing the vehicle body to quickly lift upward with an acceleration a. During the upward lifting process, the active suspension 1 gradually extends, and jump acting force F applied to the vehicle body by the second acting force and the first acting force gradually decreases as the energy stored in the spring 11 is released. In (b) in FIG. 5, a height of the active suspension 1 reaches a second height h2, and the second height h2 is greater than the first height h1. In this case, the wheel does not leave the ground.

When the active suspension 1 is extended to a maximum stroke, an upward movement velocity Vc1 of the vehicle body is still greater than 0, that is, the vehicle body still keeps moving upward, and the wheel may be driven off the ground through the active suspension 1. In this case, the height of the active suspension 1 is a third height h3 in (c) in FIG. 5, and a height difference between the third height h3 and the first height h1 is △h31. Herein, based on gravity of the vehicle body, initial jump force required by the vehicle body to maintain the upward movement velocity Vc1 greater than 0 at the height of △h31 may be obtained.

After leaving the ground, the wheel continues to move upward along with the vehicle body. As shown in (d) in FIG. 5, the wheel continues to move away from the ground. In this case, the height of the active suspension 1 still maintains the third height h3 in (c) in FIG. 5.

After the jump acting force F applied by the active suspension 1 to the vehicle body is less than the gravity of the vehicle body, an upward moving speed of the vehicle body starts decreasing. When the upward moving speed of the vehicle body decreases to a specified speed threshold Vc2, the control apparatus 2 may control the active suspension 1 to perform a wheel-lifting movement of pulling the wheel toward the vehicle body. In this case, the active suspension 1 is compressed from the third height h3 in (d) in FIG. 5 to a fourth height h4 in (e) in FIG. 5. The fourth height h4 may be equal to the first height h1 or greater than the first height h1, which is not limited herein.

When the vehicle height is lowered, the control apparatus 2 controls the shock absorber 12 to be in a passive state without actively adjusting an output, to better alleviate impact force at a moment of vehicle landing. After the wheel lands, landing adjustment may be performed based on step S450, or may be performed through damping force of the shock absorber 12.

The action process and a corresponding control step shown in FIG. 5 are applicable to the foregoing vehicle jump with one wheel leaving the ground, the vehicle jump with two wheels leaving the ground, and the vehicle jump with all wheels leaving the ground, provided that a corresponding suspension assembly and accumulator are controlled based on a corresponding control step to complete a corresponding action. Details are not described herein again.

According to the control method in step S410 to step S450, the vehicle may be driven to jump through the active suspension, and during jumping and landing, the vehicle body may be quickly stabilized by controlling the active suspension, thereby improving comfort, safety and controllability of the vehicle.

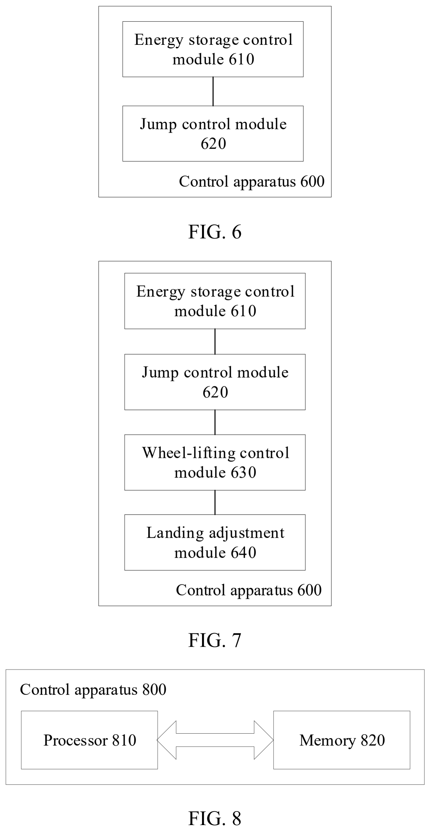

FIG. 6 is a diagram of a composition structure of an active suspension control apparatus according to some embodiments. As shown in FIG. 6, the control apparatus 600 may include an energy storage control module 610 and a jump control module 620.

The energy storage control module 510 is configured to: when receiving a jump instruction, store energy in an accumulator until energy stored in the accumulator reaches a specified first stored energy.

The jump control module 520 is configured to: when the energy stored in the accumulator reaches the first stored energy, control an active suspension to drive a vehicle body to jump, to release the first stored energy. Initial jump force of the vehicle body includes: first acting force that is applied by the accumulator and that corresponds to the first stored energy and second acting force applied by a shock absorber of the active suspension. The initial jump force enables an upward movement velocity of the vehicle body to be greater than 0 when a wheel leaves the ground.

In some embodiments, as shown in FIG. 7, the control apparatus 600 further includes a wheel-lifting control module 630. After the jump control module 620 controls the active suspension to start driving the vehicle body to jump, when the wheel leaves the ground, the wheel-lifting control module 630 controls the active suspension to perform a wheel-lifting movement of pulling the wheel toward the vehicle body.

In some embodiments, when the wheel leaves the ground and a jump speed of the vehicle body decreases to a specified speed threshold, the wheel-lifting control module 630 may control the active suspension to perform the wheel-lifting movement, and the specified speed threshold is greater than 0.

In some embodiments, the energy storage control module 610 is further configured to: after the wheel-lifting control module 630 controls the active suspension to perform the wheel-lifting movement of pulling the wheel toward the vehicle body, when the wheel lands, store energy in the accumulator until energy stored in the accumulator reaches a specified second stored energy. The second stored energy is greater than the first stored energy. In these embodiments, the jump control module 620 is further configured to: when the energy stored in the accumulator reaches the second stored energy, control the active suspension to drive the vehicle body to jump, to release the second stored energy.

In some embodiments, as shown in FIG. 7, the control apparatus 500 further includes a landing adjustment module 640. After the wheel-lifting control module 630 controls the active suspension to perform the wheel-lifting movement of pulling the wheel toward the vehicle body, when the wheel lands, the landing adjustment module 640 obtains a moving speed of a moving component that is of the shock absorber and that is connected to the vehicle body, and based on the moving speed of the moving component of the shock absorber, controls the shock absorber to output acting force against vibration of the vehicle body.

In some embodiments, the landing adjustment module 640 is further configured to: after the wheel-lifting control module 630 controls the active suspension to perform the wheel-lifting movement of pulling the wheel toward the vehicle body, when a vehicle height is lowered, control the shock absorber to be in a passive state without actively adjusting an output.

FIG. 8 is a diagram of a hardware structure of a control apparatus according to some other embodiments. As shown in FIG. 8, the control apparatus 800 includes a memory 820 and a processor 810. The memory 820 stores a computer program, and the computer program is configured to control the processor to perform an operation for performing the control method according to any embodiment of the present disclosure.

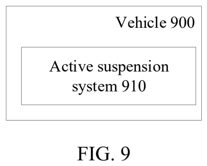

An embodiment of the present disclosure further provides a vehicle. As shown in FIG. 9, the vehicle 900 includes an active suspension system 910. An active suspension of the active suspension system is connected between a vehicle body and a wheel of the vehicle 900. The active suspension system 910 includes the active suspension, an accumulator, and a control apparatus. The active suspension includes at least a shock absorber. When the active suspension includes a spring, the accumulator may include the springs of the active suspension. The accumulator and the active suspension are assemblies of the active suspension system for connecting the vehicle body and the wheel. The active suspension system 910 may have a same or similar structure as the active suspension system AS in FIG. 1.

The control apparatus may be the control apparatus in any embodiment shown in FIG. 6 to FIG. 8. The control apparatus outputs, based on a detection signal output by a detection apparatus, a control signal for controlling action of the shock absorber, to complete vehicle jump.

**Claims**

1.  A vehicle jump control method, wherein the method comprises:

    when receiving a jump instruction, storing energy in an accumulator until energy stored in the accumulator reaches a specified first stored energy; and
    when the energy stored in the accumulator reaches the first stored energy, controlling an active suspension to drive a vehicle body to jump, to release the first stored energy, wherein initial jump force of the vehicle body comprises: first acting force that is applied by the accumulator and that corresponds to the first stored energy and second acting force applied by a shock absorber of the active suspension, and the initial jump force enables an upward movement velocity of the vehicle body to be greater than 0 when a wheel leaves the ground.

2.  The control method according to claim 1, wherein the accumulator comprises a plurality of springs, the active suspension comprises a plurality of shock absorbers, and storing energy in the accumulator until energy stored in the accumulator reaches the specified first stored energy comprises:

    storing energy in the plurality of springs until energy stored together in the plurality of springs reaches the specified first stored energy, wherein
    the second acting force applied by the shock absorber of the active suspension is acting force jointly applied by the plurality of shock absorbers of the active suspension.

3.  The control method according to claim 1 or 2, wherein the accumulator is a spring of the active suspension, and storing energy in the accumulator until energy stored in the accumulator reaches the specified first stored energy comprises:
    controlling the active suspension to perform a first energy storage movement of compressing the spring until energy stored in the spring reaches the specified first stored energy, wherein the initial jump force of the vehicle body comprises: the first acting force that is applied by the spring and that corresponds to the first stored energy and the second acting force applied by the shock absorber, so that the upward movement velocity of the vehicle body is greater than 0 when the wheel leaves the ground.

4.  The control method according to any one of claims 1 to 3, wherein the first acting force is greater than the second acting force.

5. The control method according to any one of claims 1 to 4, wherein the initial jump force enables the upward movement velocity of the vehicle body to be greater than 0 when the active suspension reaches a maximum stroke.

6. The control method according to any one of claims 1 to 5, wherein the shock absorber applies upward acting force to the vehicle body during a process of releasing the first stored energy by the accumulator.

7. The control method according to any one of claims 1 to 6, wherein a movement velocity of the active suspension during energy storage by the accumulator is smaller than an initial movement velocity of the active suspension during the release of the first stored energy by the accumulator.

8. The control method according to any one of claims 1 to 7, wherein after controlling the active suspension to drive the vehicle body to jump, the method further comprises:
when the wheel leaves the ground, controlling the active suspension to perform a wheel-lifting movement of pulling the wheel toward the vehicle body.

9. The control method according to claim 8, wherein when the wheel leaves the ground, controlling the active suspension to perform the wheel-lifting movement of pulling the wheel toward the vehicle body comprises:
when the wheel leaves the ground and a jump speed of the vehicle body decreases to a specified speed threshold, controlling the active suspension to perform the wheel-lifting movement, wherein the specified speed threshold is greater than 0.

10. The control method according to claim 8 or 9, wherein after controlling the active suspension to perform the wheel-lifting movement of pulling the wheel toward the vehicle body, the method further comprises:

   when the wheel lands, storing energy in the accumulator until energy stored in the accumulator reaches a specified second stored energy, wherein the second stored energy is greater than the first stored energy; and
   when the energy stored in the accumulator reaches the second stored energy, controlling the active suspension to drive the vehicle body to jump, to release the second stored energy.

11. The control method according to claim 10, wherein a movement velocity of the active suspension during the storage of the second stored energy by the accumulator is greater than a movement velocity of the active suspension during the storage of the first stored energy by the accumulator.

12. The control method according to any one of claims 8 to 11, wherein after controlling the active suspension to perform the wheel-lifting movement of pulling the wheel toward the vehicle body, the method further comprises:
when a vehicle height is lowered, controlling the shock absorber to be in a passive state without actively adjusting an output.

13. A vehicle jump control apparatus, comprising:

   an energy storage control module, configured to: when receiving a jump instruction, store energy in an accumulator until energy stored in the accumulator reaches a specified first stored energy; and
   a jump control module, configured to: when the energy stored in the accumulator reaches the first stored energy, control an active suspension to drive a vehicle body to jump, to release the first stored energy, wherein
   initial jump force of the vehicle body comprises: first acting force that is applied by the accumulator and that corresponds to the first stored energy and second acting force applied by a shock absorber of the active suspension, and the initial jump force enables an upward movement velocity of the vehicle body to be greater than 0 when a wheel leaves the ground.

14. A vehicle jump control apparatus, comprising a memory and a processor, the memory stores executable instructions, and the instructions are configured to control the processor to perform an operation for executing the control method according to any one of claims 1 to 12.

15. An active suspension system, comprising:

   an active suspension, comprising a shock absorber for connecting a vehicle body and a wheel;
   an accumulator, configured to connect the vehicle body and the wheel; and
   a control apparatus, the control apparatus being the control apparatus according to claim 13 or 14.

16. A vehicle, comprising the active suspension system according to claim 15, wherein the shock absorber and the accumulator are connected between the vehicle body and the wheel.

FIG. 1

FIG. 2

When receiving a jump instruction, store energy in an accumulator until energy stored in the accumulator reaches a specified first stored energy ⟋ S310

When the energy stored in the accumulator reaches the first stored energy, control an active suspension to drive a vehicle body to jump, to release a first energy storage movement, where initial jump force of the vehicle body includes: first acting force that is applied by the accumulator and that corresponds to the first stored energy and second acting force applied by a shock absorber of the active suspension; and the initial jump force enables an upward movement velocity of the vehicle body to be greater than 0 when a wheel leaves the ground ⟋ S320

FIG. 3

According to a received jump instruction, control an active suspension to perform a first energy storage movement of compressing a spring until energy stored in the spring reaches a specified first stored energy — S410

When the energy stored in the spring reaches the first stored energy, control the active suspension to drive a vehicle body to jump, to release a first energy storage movement, where initial jump force applied by the active suspension to the vehicle body by releasing the first stored energy includes: first acting force that is applied by the spring and that corresponds to the first stored energy and second acting force applied by a shock absorber of the active suspension; and the initial jump force enables an upward movement velocity of the vehicle body to be greater than 0 when a wheel leaves the ground — S420

When the wheel leaves the ground, control the active suspension to perform a wheel-lifting movement of pulling the wheel toward the vehicle body — S430

When a vehicle height is lowered, control the shock absorber to be in a passive state without actively adjusting an output — S440

When the wheel lands, obtain a moving speed of a moving component that is of the shock absorber and that is connected to the vehicle body, and based on the moving speed of the moving component of the shock absorber, control the shock absorber to output acting force against vibration of the vehicle body — S450

FIG. 4

FIG. 5

Energy storage control module 610

Jump control module 620

Control apparatus 600

FIG. 6

Energy storage control module 610

Jump control module 620

Wheel-lifting control module 630

Landing adjustment module 640

Control apparatus 600

FIG. 7

Control apparatus 800

Processor 810

Memory 820

FIG. 8

Vehicle 900

Active suspension
system 910

FIG. 9

# INTERNATIONAL SEARCH REPORT

| | International application No. |
|---|---|
| | **PCT/CN2023/128513** |

| | |
|---|---|
| **A.** | **CLASSIFICATION OF SUBJECT MATTER** |
| | B60G 17/015(2006.01)i |

According to International Patent Classification (IPC) or to both national classification and IPC

| | |
|---|---|
| **B.** | **FIELDS SEARCHED** |

Minimum documentation searched (classification system followed by classification symbols)

IPC:B06G, B62D

Documentation searched other than minimum documentation to the extent that such documents are included in the fields searched

Electronic data base consulted during the international search (name of data base and, where practicable, search terms used)

CNTXT, EXTXT, WPABS, VEN, CJFD: 车辆, 起跳, 腾空, 储能, 蓄能, 离地, 弹簧, 液压, 力, vehicle, jump, rise, energy storage, accumulate, force, spring, hydraulic

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 102328703 A (ZHEJIANG UNIVERSITY) 25 January 2012 (2012-01-25) specific embodiments and figures 1-15 | 1-16 |
| A | CN 108891219 A (TAIYUAN UNIVERSITY OF SCIENCE AND TECHNOLOGY) 27 November 2018 (2018-11-27) entire document | 1-16 |
| A | CN 111417444 A (YOU ZHONGQIAN) 14 July 2020 (2020-07-14) entire document | 1-16 |
| A | CN 1769083 A (TOYOTA MOTOR CORP.) 10 May 2006 (2006-05-10) entire document | 1-16 |
| A | CN 1994804 A (ZHEJIANG UNIVERSITY) 11 July 2007 (2007-07-11) entire document | 1-16 |
| A | CN 201046656 Y (BEIJING SUNLIGHT ROAD SPECIAL VEHICLE TECHNOLOGY CO., LTD.) 16 April 2008 (2008-04-16) entire document | 1-16 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 January 2024** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/128513** |

### C. DOCUMENTS CONSIDERED TO BE RELEVANT

| Category* | Citation of document, with indication, where appropriate, of the relevant passages | Relevant to claim No. |
| --- | --- | --- |
| A | CN 207737382 U (SICHUAN BAOLI MICROELECTRONIC CO., LTD.) 17 August 2018 (2018-08-17)<br>entire document | 1-16 |
| A | CN 218248492 U (JADA TOYS, INC.) 10 January 2023 (2023-01-10)<br>entire document | 1-16 |
| A | DE 4117455 A1 (HERMANN HEMSCHEIDT MASCHINENFABRIK GMBH & CO.) 03 December 1992 (1992-12-03)<br>entire document | 1-16 |
| A | JP 2002166717 A (HITACHI, LTD.) 11 June 2002 (2002-06-11)<br>entire document | 1-16 |
| A | JP 2013082432 A (AISIN SEIKI CO., LTD.) 09 May 2013 (2013-05-09)<br>entire document | 1-16 |
| A | US 2022016949 A1 (POLARIS INC.) 20 January 2022 (2022-01-20)<br>entire document | 1-16 |
| A | US 5060969 A (MAZDA MOTOR CORP.) 29 October 1991 (1991-10-29)<br>entire document | 1-16 |
| A | WO 2014178761 A1 (VOLVO TRUCK CORP.) 06 November 2014 (2014-11-06)<br>entire document | 1-16 |

Form PCT/ISA/210 (second sheet) (July 2022)

**INTERNATIONAL SEARCH REPORT**
Information on patent family members

International application No.

**PCT/CN2023/128513**

| Patent document cited in search report | | | Publication date (day/month/year) | Patent family member(s) | | | Publication date (day/month/year) |
|---|---|---|---|---|---|---|---|
| CN | 102328703 | A | 25 January 2012 | None | | | |
| CN | 108891219 | A | 27 November 2018 | None | | | |
| CN | 111417444 | A | 14 July 2020 | WO | 2021042261 | A1 | 11 March 2021 |
| CN | 1769083 | A | 10 May 2006 | US | 2006076740 | A1 | 13 April 2006 |
| | | | | US | 7788011 | B2 | 31 August 2010 |
| | | | | EP | 1645455 | A2 | 12 April 2006 |
| | | | | EP | 1645455 | A3 | 30 July 2014 |
| | | | | EP | 1645455 | B1 | 06 March 2019 |
| | | | | JP | 2006109642 | A | 20 April 2006 |
| | | | | JP | 4471103 | B2 | 02 June 2010 |
| CN | 1994804 | A | 11 July 2007 | None | | | |
| CN | 201046656 | Y | 16 April 2008 | None | | | |
| CN | 207737382 | U | 17 August 2018 | None | | | |
| CN | 218248492 | U | 10 January 2023 | None | | | |
| DE | 4117455 | A1 | 03 December 1992 | DE | 4117455 | C2 | 19 May 1993 |
| JP | 2002166717 | A | 11 June 2002 | None | | | |
| JP | 2013082432 | A | 09 May 2013 | JP | 5761578 | B2 | 12 August 2015 |
| US | 2022016949 | A1 | 20 January 2022 | None | | | |
| US | 5060969 | A | 29 October 1991 | DE | 4001198 | A1 | 09 August 1990 |
| | | | | JPH | 02189220 | A | 25 July 1990 |
| | | | | JP | 2685267 | B2 | 03 December 1997 |
| WO | 2014178761 | A1 | 06 November 2014 | EP | 2991843 | A1 | 09 March 2016 |
| | | | | EP | 2991843 | A4 | 20 December 2017 |
| | | | | EP | 2991843 | B1 | 25 November 2020 |

Form PCT/ISA/210 (patent family annex) (July 2022)

**EP 4 691 808 A1**

**REFERENCES CITED IN THE DESCRIPTION**

**Patent documents cited in the description**

- CN 202310382073